# EUROPÄISCHE PATENTANMELDUNG

(11) **EP 1 063 040 A1**
(43) Veröffentlichungstag der Anmeldung: **27.12.2000**
(21) Anmeldenummer: 00112320.7
(22) Anmeldetag: 08.06.2000
(51) Int. Cl.: B23C 5/06

(54) **Werkzeug zur spanabhebenden Bearbeitung**

(30) Priorität: 25.06.1999 DE 19929201
(71) Anmelder: Haertel, Meiko, 58332 Schwelm (DE); Sprenger, Helmut, 58256 Ennepetal (DE)
(72) Erfinder: Haertel, Meiko, 58332 Schwelm (DE); Sprenger, Helmut, 58256 Ennepetal (DE)
(74) Vertreter: Eder, Thomas, Dr.-Ing.

(57) **Zusammenfassung**

Werkzeug zur spanabhebenden Bearbeitung mindestens eines Werkstückes, insbesondere Fräsringes (1), mit einem zentrischen Haltebereich (2) zur Befestigung an einem Antriebselement und mit einem ringförmigen Arbeitsbereich (3) mit über den Umfang verteilten, das Werkstück bearbeitenden Zähnen (4). Die Zähne (4) des Arbeitsbereichs (3) sind jeweils ballig und gekrümmt ausgebildet.

## Beschreibung

Die Erfindung bezieht sich auf ein Werkzeug zur spanabhebenden Bearbeitung mindestens eines Werkstücks, insbesondere einen Fräsring, mit einem zentrischen Haltebereich zur Befestigung an einem Antriebselement und mit einem ringförmigen Arbeitsbereich mit über den Umfang verteilten, das Werkstück bearbeitenden Zähnen.

Als Stand der Technik ist bereits ein derartiges Werkzeug bekannt, welches als umlaufende Feilscheibe ausgebildet ist (DE-PS 9 35 292). Diese Feilscheibe ist aus Feilsegmenten zusammengesetzt, welche am inneren und äußeren Umfang mit Schrägflächen versehen sind. Die Feilsegmente werden über ein Spannteil an die Innenseite eines scheibenförmigen Tragkörpers angepresst. Weiterhin kann ein Feilring Anwendung finden, welcher am Umfang und an der Oberfläche mit weiteren Zähnen versehen ist.

Diese bekannte Konstruktion ist bauaufwendig, da sie aus mehreren Teilen besteht, welche funktionssicher miteinander verbunden werden müssen, um eine korrekte spanabhebende Bearbeitung eines Werkstücks zu gewährleisten. Weiterhin ist es bei dieser bekannten Konstruktion nur sehr schwer möglich, rauhe Oberflächen eines Werkstückes zu begradigen, d.h. beispielsweise Schweißnähte zu entfernen oder andere Unebenheiten zu entgraten.

Zum Stand der Technik zählt darüber hinaus ein Fräskopf (DE-PS 53 505). Dieser Fräskopf besteht aus einem Grundkörper, an welchem über eine Deckelplatte eine Fräsplatte befestigt ist. Der Fräskopf ist mit einem Handgriff versehen; er kann somit gegen ein rotierendes Werkstück bewegt werden, welches beispielsweise in einer Drehmaschine befestigt ist. Die Fräsplatte bei diesem Fräskopf ist nur in der Lage, einen relativ geringen Bereich eines Werkstückes zu bearbeiten, so dass nicht die Möglichkeit besteht, großflächig eine Entgratung eines Werkstücks durchzuführen oder beispielsweise vorhandene Schweißnähte zu glätten.

Der vorliegenden Erfindung liegt die Aufgabe zugrunde, ein Werkzeug der eingangs genannten Art zu schaffen, welches bei einfachem Aufbau und hoher Standzeit eine große Effektivität besitzt und insbesondere in der Lage ist, spanabhebend Oberflächen zu begradigen, beispielsweise zu entgraten oder Schweißnähte zu beseitigen.

Diese Aufgabe wird erfindungsgemäß dadurch gelöst, dass die Zähne im Arbeitsbereich jeweils ballig ausgebildet sind. Hierbei kann vorteilhafterweise eine Stirnseite des Fräsrings den Arbeitsbereich aufweisen, wobei alternativ die Möglichkeit besteht, dass eine Stirnseite und der daran anschließende Außenumfang des Fräsrings den Arbeitsbereich definiert. Durch die spezielle Gestaltung der Zähne in balliger und außerdem in gekrümmter Form ergibt sich eine verbesserte Schneidfähigkeit sowie eine schnellere Bearbeitung des vorliegenden Werkstücks.

Das erfindungsgemäße Werkzeug kann beispielsweise für manuell anwendbare Schleifgeräte oder als stationäres Werkzeug eingesetzt werden, und zwar für alle Materialien, welche nicht härter sind als das vorzugsweise aus einem Stück bestehende Werkzeug.

Durch die spezielle Gestaltung der Zähne ergibt sich darüber hinaus vorteilhafterweise eine geringere Lärmbelastung.

In weiterer Ausgestaltung der Erfindung kann die Balligkeit der Zähne durch unterschiedliche Radien definiert sein. Hierbei besteht vorteilhafterweise die Möglichkeit, dass der äußere Bereich der Zähne eine stärkere Balligkeit als der innere Bereich aufweist, so dass hieraus eine weitere Verbesserung der Effektivität des erfindungsgemäßen Werkzeugs resultiert.

Die Zähne können in weiterer Ausgestaltung der Erfindung radial über den gesamten Arbeitsbereich gekrümmt sein; es besteht jedoch auch die Möglichkeit, dass die Krümmung des jeweiligen Zahns mindestens eine Unterbrechung aufweist. Durch diese Unterbrechung ergibt sich der Vorteil, dass ein ruhigerer Lauf des Werkzeugs gewährleistet wird, wobei außerdem die Späne gebrochen werden, eine leichtere Handhabung vorliegt und eine Belüftungsmöglichkeit gegeben ist.

Der Haltebereich und der Arbeitsbereich können einstückig ausgebildet sein, wobei das Material des Haltebereichs und des Arbeitsbereichs gesintertes Hartmetall ist. Dieses Material kann beispielsweise Wolframkarbid sein. Somit liegt vorteilhafterweise ein einstückiges Werkzeug zur spanabhebenden Bearbeitung vor, welches hohe Standzeiten aufweist und ein mehrmaliges Nachschleifen, d.h. Schärfen ermöglicht.

Nach einem weiteren Merkmal der Erfindung kann der Haltebereich als Durchgangsöffnung zum Lagern einer Antriebswelle ausgebildet sein, wobei an die Durchgangsöffnung eine Aussparung für ein Befestigungselement, beispielsweise für eine Befestigungsmutter, angrenzen kann. Die Aussparung begrenzt außenseitig eine innere Kante des Arbeitsbereiches.

Die Erfindung wird nachfolgend anhand eines in der Zeichnung dargestellten Ausführungsbeispiels näher beschrieben. In der Zeichnung zeigen:
- Fig. 1: eine schematische Draufsicht auf das erfindungsgemäße Werkzeug;
- Fig. 2: einen Schnitt nach der Linie II-II in Fig. 1.

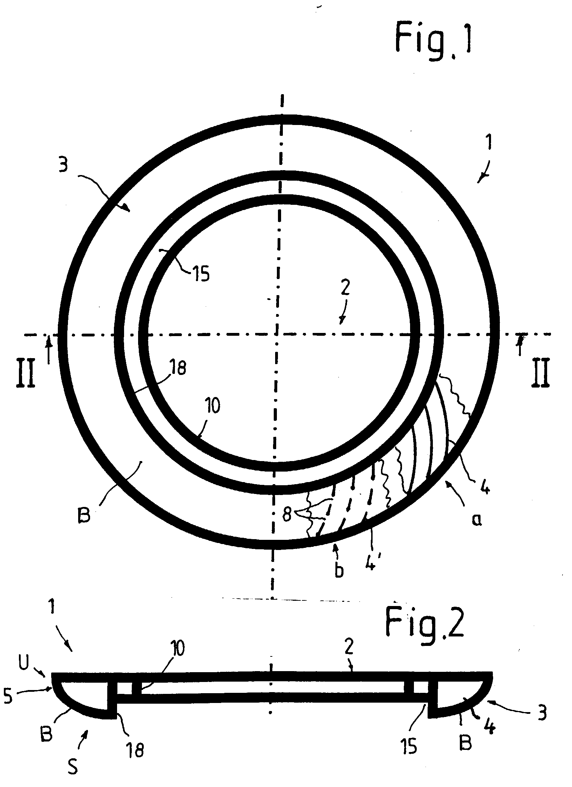

In den Figuren 1 und 2 ist ein Werkzeug zur spanabhebenden Bearbeitung mindestens eines Werkstücks dargestellt, wobei dieses Werkzeug insbesondere als Fräsring 1 eingesetzt werden kann. Dieser Fräsring 1 weist einen zentrischen Haltebereich 2 zur Befestigung an einem nicht näher dargestellten Antriebselement und einen ringförmigen Arbeitsbereich 3 mit über den Umfang verteilten, das Werkstück bearbeitenden Zähnen 4 auf.

Insbesondere aus Fig. 2 geht hervor, dass die Zähne 4 des Arbeitsbereichs 3 jeweils ballig und gekrümmt ausgebildet sind. Hierbei besteht die Möglichkeit, dass gemäß Fig. 2 eine Stirnseite S und der daran anschließende Außenumfang U des Fräsrings 1 den Arbeitsbereich 3 definiert. Die Balligkeit B der Zähne 4 kann durch unterschiedliche Radien ausgestaltet sein, wobei vorteilhafterweise der äußere Bereich 5 der balligen Zähne 4 eine stärkere Balligkeit als der innere Bereich aufweist.

Gemäß der Möglichkeit a in Fig. 1 kann die Gestaltung der Zähne 4 so sein, dass sie radial über den gesamten Arbeitsbereich 3 gekrümmt sind. Alternativ besteht auch die Möglichkeit, dass gemäß Darstellung b die Krümmung des jeweiligen Zahns 4' mindestens eine Unterbrechung 8 aufweist. Im vorliegenden Fall sind zwei Unterbrechungen 8 für jeden der gekrümmten Zähne 4' vorgesehen.

Aus Fig. 1 und 2 geht hervor, dass der Haltebereich 2 als Durchgangsöffnung 10 zum Lagern einer nicht näher dargestellten Antriebswelle ausgebildet ist. Hierbei kann an die Durchgangsöffnung 10 eine Aussparung 15 für ein Befestigungselement, beispielsweise für eine Befestigungsmutter, angrenzen, mit welcher die nicht näher dargestellte Antriebswelle funktionssicher an dem Fräsring 1 befestigt wird.

Insbesondere aus Fig. 2 geht hervor, dass die Aussparung 15 außenseitig eine innere Kante 18 des Arbeitsbereichs 3 begrenzt.

Der erfindungsgemäße Fräsring 1 mit Haltebereich 2 und Arbeitsbereich 3 ist vorzugsweise einstückig ausgebildet, wobei das Material gesintertes Hartmetall, z.B. Wolframkarbid, sein kann. Der Rohling wird zunächst gesintert und dann geschliffen. Hierdurch ergibt sich ein recyclebares Produkt, welches sehr gut für den Einsatz bei Handwerkzeugen oder bei spanabhebenden Maschinen geeignet ist. Infolge der besonderen Gestaltung der ballig und gekrümmt ausgebildeten Zähne 4 bzw. 4' wird eine sehr wirkungsvolle spanabhebende Bearbeitung eines Werkstücks erzielt, insbesondere beim Entgraten, beim Begradigen von Schweißnähten oder beim Beseitigen von rauhen Oberflächen des betreffenden Werkstücks. Die spezielle Gestaltung der Zähne führt darüber hinaus vorteilhafterweise zu einer geringeren Lärmbelastung, zu einem ruhigeren Lauf, zu einer leichteren Handhabung des Werkzeugs und zu einer verbesserten Belüftung.

## Patentansprüche

1. Werkzeug zur spanabhebenden Bearbeitung mindestens eines Werkstücks, insbesondere Fräsring (1), mit einem zentrischen Haltebereich (2) zur Befestigung an einem Antriebselement und mit einem ringförmigen Arbeitsbereich (3) mit über den Umfang verteilten, das Werkstück bearbeitenden Zähnen (4),
**dadurch gekennzeichnet**,
dass die Zähne (4; 4') im Arbeitsbereich (3) jeweils ballig ausgebildet sind.

2. Werkzeug nach Anspruch 1, **dadurch gekennzeichnet**, dass die Zähne (4, 4') gekrümmt ausgebildet sind.

3. Werkzeug nach Anspruch 1 oder 2, **dadurch gekennzeichnet**, dass eine Stirnseite (S) des Fräsrings (1) den Arbeitsbereich (3) aufweist.

4. Werkzeug nach Anspruch 1 oder 2, **dadurch gekennzeichnet**, dass eine Stirnseite (S) und der daran anschließende Außenumfang (U) des Fräsrings (1) den Arbeitsbereich (3) aufweist.

5. Werkzeug nach einem oder mehreren der vorhergehenden Ansprüche, **dadurch gekennzeichnet**, dass die Balligkeit (B) der Zähne (4, 4') durch unterschiedliche Radien definiert ist.

6. Werkzeug nach Anspruch 5, **dadurch gekennzeichnet**, dass der äußere Bereich (5) der Zähne (4; 4') eine stärkere Balligkeit als der innere Bereich aufweist.

7. Werkzeug nach einem oder mehreren der vorhergehenden Ansprüche, **dadurch gekennzeichnet**, dass die Zähne (4) radial über den gesamten Arbeitsbereich (3) gekrümmt sind.

8. Werkzeug nach Anspruch 7, **dadurch gekennzeichnet**, dass die Krümmung des jeweiligen Zahns (4') mindestens eine Unterbrechung (8) aufweist.

9. Werkzeug nach einem oder mehreren der vorhergehenden Ansprüche, **dadurch gekennzeichnet**, dass der Haltebereich (2) und der Arbeitsbereich (3) einstückig ausgebildet sind.

10. Werkzeug nach einem oder mehreren der vorhergehenden Ansprüche, **dadurch gekennzeichnet**, dass der Haltebereich (2) als Durchgangsöffnung (10) zum Lagern einer Antriebswelle ausgebildet ist.

11. Werkzeug nach Anspruch 10, **dadurch gekennzeichnet**, dass an die Durchgangsöffnung (10) eine Aussparung (15) für ein Befestigungselement angrenzt.

12. Werkzeug nach Anspruch 11, **dadurch gekennzeichnet**, dass die Aussparung (15) außenseitig eine innere Kante (18) des Arbeitsbereichs (3) begrenzt.

13. Werkzeug nach Anspruch 9, **dadurch gekennzeichnet**, dass das Material des Haltebereichs (2) und des Arbeitsbereichs (3) gesintertes Hartmetall ist.

14. Werkzeug nach Anspruch 13, **dadurch gekennzeichnet**, dass das Material Wolframkarbid ist.

15. Verwendung des Werkzeugs nach einem oder mehreren der vorhergehenden Ansprüche für den Einsatz bei Handwerkzeugen oder bei spanabhebenden Maschinen.
